(19) **Europäisches Patentamt European Patent Office Office européen des brevets**

(11) **EP 3 940 494 B1**

(12) **EUROPEAN PATENT SPECIFICATION**

(45) Date of publication and mention of the grant of the patent:
**19.04.2023 Bulletin 2023/16**

(21) Application number: **21184279.4**

(22) Date of filing: **07.07.2021**

(51) International Patent Classification (IPC):
**G05D 1/02** *(2020.01)* **G01C 21/34** *(2006.01)*

(52) Cooperative Patent Classification (CPC):
**G05D 1/0217; G01C 21/343;** G05D 2201/0207

(54) **PATH PLANNING METHOD FOR SUBSTATION INSPECTION ROBOT**

WEGPLANUNGSVERFAHREN FÜR EINEN UNTERSTATIONSINSPEKTIONSROBOTER

PROCÉDÉ DE PLANIFICATION DE TRAJET POUR UN ROBOT D'INSPECTION DE SOUS-STATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2020 CN 202010693555**

(43) Date of publication of application:
**19.01.2022 Bulletin 2022/03**

(73) Proprietor: **Wuhan University of Science and Technology**
**Wuhan, Hubei 430081 (CN)**

(72) Inventors:
- **CHEN, Yang**
  **Wuhan, Hubei 430081 (CN)**
- **LU, Hao**
  **Wuhan, Hubei 430081 (CN)**
- **WU, Huaiyu**
  **Wuhan, Hubei 430081 (CN)**
- **CHENG, Lei**
  **Wuhan, Hubei 430081 (CN)**
- **XIONG, Ling**
  **Wuhan, Hubei 430081 (CN)**
- **ZHENG, Xiujuan**
  **Wuhan, Hubei 430081 (CN)**
- **CHEN, Zhihuan**
  **Wuhan, Hubei 430081 (CN)**
- **SHU, Yifei**
  **Wuhan, Hubei 430081 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) References cited:
**CN-A- 109 141 430**

- **YAN DENG ET AL: "A Path Planning Method for Substation Laser Inspection Robot Based on Improved Ant Colony Algorithm", PROCEEDINGS OF THE 2ND INTERNATIONAL CONFERENCE ON COMPUTER ENGINEERING, INFORMATION SCIENCE & APPLICATION TECHNOLOGY (ICCIA 2017) ADVANCES IN COMPUTER SCIENCE RESEARCH, VOLUME 74, 30 July 2016 (2016-07-30), pages 62-69, XP055851485, Paris, France DOI: 10.2991/iccia-17.2017.10 ISBN: 978-94-625-2361-6**
- **ZHANG XIN ET AL: "Optimal Inspection Path planning of substation robot in the complex substation environment", 2019 CHINESE AUTOMATION CONGRESS (CAC), IEEE, 22 November 2019 (2019-11-22), pages 5064-5068, XP033712035, DOI: 10.1109/CAC48633.2019.8996834 [retrieved on 2020-02-12]**

## Description

### TECHNICAL FIELD

The present invention relates to artificial intelligence technology, in particular to a path planning method for a substation inspection robot.

### BACKGROUND

High-voltage lines in a substation are prone to power accidents due to influence of dust, aging, and weather, so that regular inspection and measurement are required to find and eliminate potential safety hazards as early as possible. Traditional manual inspection methods have many problems, such as heavy tasks, low efficiency, and easiness in inspection missing. However, a substation inspection robot can replace manual work to perform completely autonomous and all-weather inspection.

For example, YAN DENG ET AL considers the shortening of robotic inspection paths and, in the course of this, describes a method for path planning based on an improved ant colony algorithm, the method of locomotion, the inspection task, and the road environment. This method uses the topological method to model the road environment. The Dijkstra algorithm and the improved ant colony algorithm are used to plan the inspection path of a laser inspection robot. In this way, after the laser inspection robot encounters an obstacle, it can re-plan the new inspection path for the remaining undetected task points and finally return to the starting point. The results indicate that the improved ant colony algorithm has obvious advantages in terms of path length and number of passing points, which can make the inspection route of the laser inspection robot optimal or sub-optimal.

Furthermore, ZHANG XIN ET AL. in his paper refers to intelligent robotic inspection systems that can replace manual inspections in substations. As the difficulty of path planning is the basic problem in the application of robotic systems in substations. Consideration of the path planning problem is of considerable practical and scientific importance. Based on the graph theory, the substation environment map is modeled, and the heuristic search algorithm and Dijkstra algorithm are studied to perform the path planning of the inspection robot in the substation environment. The Dijkstra algorithm is improved considering the actual operating conditions of the system, the increase of turning time and turning angle as evaluation indexes to make the algorithm more suitable for practical applications. The method proposed in this paper is verified to prove the feasibility of the proposed method.

When an existing robot carries an infrared thermal imager to perform regular inspection and temperature measurement on a crimping wire at a tail end of a high voltage cable, the following factors need to be considered:

(1) The movement of the inspection robot is constrained by a road network of a substation. A final inspection path of the robot needs to limited in the road network.

(2) The robot is constrained by itself pose when measuring a target point. Firstly, due to the performance limitation of a measuring instrument, a distance between the robot and a temperature measurement point needs to be within an allowable and feasible range. Secondly, the adjustable pose of a measuring instrument (such as node angles of a holder) carried by the robot is objectively constrained, and especially, the pose of the robot in measurement is further limited when the degree of freedom of the holder is small.

(3) In order to improve the inspection efficiency, not only is the total movement path of the robot expected to be shorter, but also stop times is expected to be reduced as much as possible on the premise of completion of all temperature measurement points, so as to save time consumption. Since the robot only performs measurement when the robot stops, when the total number of the temperature measuring points is constant, reduction of the stop times means increase of the number of the temperature measurement points that need to be completed during each stop.

In the prior art, the path planning of the substation robot under the constraints of the road network and the robot pose in measurement is not considered, so that an existing path planning method cannot be directly applied to inspection of an electric transmission line by the robot.

### SUMMARY

The technical problem to be solved by the present invention is to provide a path planning method for a substation inspection robot aiming at the defects in the prior art.

The technical solution adopted by the present invention to solve the technical problem is the path planning method for the substation inspection robot, which includes the following steps:

1) constructing a road network constraint model according to a map for robot movement;
2) constructing a temperature measurement point inspection pose constraint model in consideration of actual constraints of the pose of a holder for installation of a camera and a measured visual distance of the camera when the robot measures the temperature of a target in combination with temperature measurement points;
3) determining a robot stop point set according to the robot movement road network and the temperature measurement point inspection pose constraint model;
4) constructing an inspection robot path planning model with a goal of minimizing time to complete inspection, and specifically, $$\min_{C, s_1, s_2, \ldots, s_K} f\left(G, T, s_0\right) = \lambda K + \frac{l_C}{v},$$

wherein $\lambda$ represents a constant of time consumed by the robot to perform temperature measurement during each stop, $\lambda K$ represents time required by performing $K$ stops for temperature measurement, $\frac{l_C}{v}$ represents time required for continuous movement of the robot on a path, $v$ is an average movement speed of the robot, and $l_C$ represents a total path length;

$G$ represents a robot movement road network, $T$ represents a set of all temperature measurement points, $s_0$ represents a position of a charging room, $C$ represents an inspection path of the robot in the road network, $s_k$ represents a position where the robot performs temperature measurement during $k$th stop, $k = 1, 2, \ldots, K$; and

5) solving the inspection robot path planning model to output an inspection path and position of each stop point corresponding to a globally optimal solution, and a set of temperature measurement points corresponding to each stop point.

According to the above solution, the step 1) of constructing the road network constraint model for robot movement according to the map is specifically as follows:

an undirected graph $G(V, E)$ is used for representing the robot movement road network, wherein $V = [v_1, v_2, \ldots v_n]$ is a road node set, $n$ is a number of road nodes, $E$ represents an undirected side set, $E(i,j)$ represents a side connected by $v_i$ and $v_j$, and a weight $W \in R^{n \times n}$ represents a distance for the robot to pass through a corresponding side.

According to the above solution, the step 2) of constructing the inspection pose constraint model is specifically as follows:

In the process that the robot measures the temperature of the target, inspection pose constraints include a camera pitch angle measurement constraint and a maximum visual distance constraint; $\theta_{max}$ represents a maximum pitch angle of a camera constrained by a holder structure and shooting quality, and $d_{max}$ represents a maximum visual distance of the camera when the measurement quality is met,

$$\arctan\left(\frac{h_i - H}{d_i}\right) \leq \theta_{max};$$

$$\sqrt{d_i^2 + \left(h_i - H\right)^2} \leq d_{max};$$

$$d_i = \sqrt{\left(x_s - x_i\right)^2 + \left(y_s - y_i\right)^2};$$

wherein $H$ is a height of a temperature measurer from the ground, the coordinate of a temperature measurement point $T_i$ is $(x_i, y_i, h_i)$, and $d_i$ is a horizontal distance between a robot stop point $s(x_s, y_s, 0)$ and the temperature measurement point $T_i$;

a temperature measurement point constraint ring $S_{Ti}$ is calculated, the temperature measurement point constraint ring $S_{Ti}$ represents a position set meeting a pose constraint condition when the robot measures the $T_i$;

$$S_{Ti} = \left\{ s(x_s, y_s, 0) \left| \frac{h_i - H}{\tan \theta_{max}} \le \sqrt{(x_s - x_i)^2 + (y_s - y_i)^2} \le \sqrt{d_{max}^2 - (h_i - H)^2} \right. \right\};$$

and

when the robot is located in the region of the ring $S_{Ti}$, the robot effectively measures the temperature of the temperature measurement point $T_i$.

According to the above solution, the step 3) of determining the robot stop point set is specifically as follows:
obtaining discretized path points by uniform interpolation on the path in the road network; assuming that a path discretization accuracy is $l_L$ (a distance between two adjacent discrete points), and a set of discrete points forming the path is $L$, and determining a stop point $s_k$ of the robot in the discretized path by an intersection of the temperature measurement point constraint ring $S_{Ti}$ and the discretized path $L$, i.e.

$$s_k \in \left( \coprod_{T_i \in T_s(s_k)} S_{T_i} \right) I \; L, k = 1, 2, \ldots, K$$

.

According to the above solution, the step 5) of solving the model is specifically as follows:
obtaining a closed-loop path that can complete the temperature measurement task by adopting ant colony optimization, then discretizing the closed-loop path, clustering the temperature measurement points by using greedy thought, applying a clustering result and a length of the closed-loop path to update road network pheromones, and meanwhile, comparing time costs in an objective function of the path planning model to update the globally optimal solution.

According to the above solution, the step 5) of obtaining the closed-loop path that can complete the temperature measurement task by adopting the ant colony optimization is specifically as follows:

5.1) initializing relevant parameters: a number $M$ of ants, a pheromone importance factor $\alpha$, a heuristic function importance factor $\beta$, a pheromone volatilization degree $\rho$, a total pheromone release amount $Q$, a maximum iteration number *iter max*, a height $H$ of a robot camera, a maximum upper limit $\theta_{max}$ of a camera pitch angle, the maximum camera visual distance $d_{max}$, the constant $\lambda$ of time consumed in the temperature measurement process of the robot, the average movement speed v of the robot, and the path discretization accuracy $l_L$;

5.2) constructing a solution space: at the initial moment, placing the ants in the charging room, and for the ants, sequentially skipping to a next node (not a repeated node) with a greatest random probability calculated according to a transition probability function until all the ants return to a starting point or there is no node to skip, and the transition probability function being shown as follows:

$$P_{ij}^m = \begin{cases} \dfrac{\left[\tau_{ij}(t)\right]^\alpha \left[\eta_{ij}(t)\right]^\beta}{\sum\limits_{r \in allow_m} \left[\tau_{ir}(t)\right]^\alpha \left[\eta_{ir}(t)\right]^\beta}, & r \in allow_m \\ 0, & r \notin allow_m \end{cases},$$

wherein $\tau_{ij}(t)$ is the concentration of residual pheromones on a side $E(i, j)$ at a moment $t$, $n_{ij}(t)$ is a heuristic function and represents an expectation level of the ants from a node v; to a node $v_j$, which is inversely proportional to a distance between the nodes, and the heuristic function is as follows:

$$\eta_{ij}(t) = \frac{1}{w_{ij}},$$

$allow_m$ represents a set of nodes to be visited by an ant $m$, $\alpha$ is the pheromone importance factor, and $\beta$ is the heuristic function importance factor.
5.3) updating pheromones:

5.3.1) marking a closed-loop path selected by the *m*th ant as $C^m$, calculating its length $l_C^m \left( m = 1, 2, \ldots, M \right)$, meanwhile, discretizing the $C^m$ to obtain a path point set $L^m$, so as to finally obtain the intersection of the $L^m$ and the constraint ring $S_{Ti}$ of the *i*th temperature measurement point, and marking the intersection as

$$B_i^m = S_{Ti} \bigcap L^m ;$$

5.3.2) when *m*=1, judging whether there is a certain $T_i$ to make $B_i^1 = \varnothing$ , *i* = 1, 2,... , $N_T$, if yes, indicating that the ant *m* cannot complete all inspection tasks, so as to make the total time to complete the task be $f_1 = \infty$; otherwise, clustering all the temperature measurement points on the path $C^m$ according to the constraints to obtain a total category number $K^1$, and substituting the total category number into the objective function to calculate inspection time cost $f_1$, sequentially calculating corresponding values $f_2$, $f_3$,..., $f_M$ when *m* = 2,3,...,*M*, and performing iteration according to the following formula:

$$\begin{cases} \tau_{ij} \left( t + 1 \right) = \left( 1 - \rho \right) \tau_{ij} \left( t \right) + \Delta \tau_{ij} \left( t \right) \\ \Delta \tau_{ij} \left( t \right) = \sum_{m=1}^{M} \Delta \tau_{ij}^m \left( t \right) \end{cases},$$

wherein $\rho \in (0,1)$ represents the pheromone volatilization degree, and $\Delta \tau_{ij}^m \left( t \right)$ represents the pheromone released by the ant *m* on the side $E(i, j)$ and is as follows:

$$\Delta \tau_{ij}^m \left( t \right) = \begin{cases} \dfrac{Q}{f_m}, & \text{ant } m \text{ moving on } E(i, j) \\ 0, & \text{others} \end{cases},$$

wherein $Q$ is a constant, $f_m$ is the total time for the ant *m* to complete the task, and $\Delta t_{ij}(t)$ represents the sum of pheromones released by all ants in an ant colony on the side $E(i, j)$; and 5.4) judging whether the ant colony terminates iteration: calculating time consumed by all ants in current iteration to complete the inspection task, comparing the time with a globally optimal solution stored in previous iteration, and when there is a lower time cost, updating the globally optimal solution; then judging whether the iteration number reaches a maximum value, if not, returning to the step 5.2), and if yes, stopping calculation and reserving the globally optimal solution in the iteration process.

According to the above solution, the step 5.3.2) of clustering all the temperature measurement points on the path $C^m$ according to the constraints comprises clustering the temperature measurement points meeting the robot pose constraints into one category based on the greedy thought, and performing iteration to obtain a clustering result, the category number obtained by clustering being the robot stop times, specifically as follows:

S1: constructing an initial set *A*=*T* of temperature measurement points to be clustered, and solving the intersection $B_i^m$ of the discretized path $L^m$ of the ant *m* and the constraint ring $S_{Ti}$ of the *i*th temperature measurement point, wherein *i*=1, 2,..., $N_T$;

S2: calculating a path point set $B_{i,j}^m = B_i^m \bigcap B_j^m$ , wherein *j*>*i* and $T_j \in A$, and the number $N_{i,j}^m = \left| B_{i,j}^m \right|$ of discrete points in the set $B_{i,j}^m$ represents the similarity between $T_i$ and $T_j$, and sorting all $N_{i,j}^m$ from large to small to obtain $N_{i,j_1}^m \geq N_{i,j_2}^m \geq \ldots \geq N_{i,j_Z}^m$ , wherein *Z* = |*A*|-1;

S3: if $N_{i,j_1}^m = 0$, indicating that $T_i$ and other target points do not have a common feasible stop path point, then classifying $T_i$ into one category separately, i.e., $T_s^m(s_k) = \{T_i\}$, and then skipping to S5 to calculate remaining stop points of the ant $m$, otherwise, performing S4;

S4: if $N_{i,j_1}^m > 0$, the path point set being $B_{i,j_1}^m \neq \varnothing$, defining the following feasible stop path set $D_{i,j_{r+1}}^m = D_{i,j_r}^m \cap B_{i,j_{r+1}}^m$, wherein $D_{i,j_1}^m = B_{i,j_1}^m$, and $r$=1, 2,..., $Z$; calculating the following constraint formula to determine $r*$

$$r* = \max r, \quad \text{s.t.} \quad D_{i,j_r}^m \neq \varnothing$$

thus obtaining a target set $T_s^m(s_k) = \{T_i, T_{j_1}, ..., T_{j_{r*}}\}$ that can complete measurement of a stop point $s_k^m$, wherein an expression of the corresponding stop point set is:

$$B_{T_s^m(s_k)}^m = \left( \coprod_{T_i \in T_s(s_k)} S_{T_i} \right) I \ L^m, k = 1, 2, ..., K \quad ,$$

and

the stop point $s_k^m$ is optionally selected from the stop point set $B_{T_s^m(s_k)}^m$;

S5: removing the target set $T_s^m(s_k)$ that can complete measurement from $A$, i.e., $A = A - T_s^m(s_k)$, selecting a next temperature measurement point from $A$ and performing S2 until $A$ is an empty set, to obtain a stop point position $s_1^m, s_2^m, ..., s_K^m$ corresponding to the path of the ant $m$ and the corresponding temperature measurement point set $T_s^m(s_1), T_s^m(s_2), K, T_s^m(s_K)$ thereof; and

S6: adjusting the order of $s_k^m$ according to an order of the road nodes in the closed-loop path $C^m$ of the robot to obtain final $T_s^m(s_1), T_s^m(s_2), K, T_s^m(s_K)$ and $s_1^m, s_2^m, ..., s_K^m$ to avoid reciprocating movement of the robot in the path.

The method of the present invention has the following beneficial effects:

1. the path planning model of the substation inspection robot is constructed under road network constraints and inspection pose constraints, and the model considers the road network and the robot pose constraints during measurement, and is suitable for daily inspection temperature measurement of high-voltage transmission lines in the substation; and
2. a path planning model solution method based on the ant colony optimization algorithm is provided; then the temperature measurement points are clustered by using the greedy thought, and the clustering result and the path length of the ants are used to update the road network pheromones; after multiple iterations, the optimal inspection path of the robot can be obtained, the positions that need to be stopped in the path in sequence, and the temperature measurement point set corresponding to each stop point.

## BRIEF DESCRIPTION OF THE DRAWINGS

The present invention will be further described below with reference to the accompanying drawings and embodiments, and in the accompanying drawings:

Fig. 1 is a schematic structural diagram of an embodiment of the present invention;

Fig. 2 is a schematic diagram of a robot movement road network and temperature measurement points of an embodiment of the present invention;

Fig. 3 is a diagram of a holder model of an embodiment of the present invention;

Fig. 4 is a schematic diagram of a temperature measurement point constraint ring of an embodiment of the present invention;

Fig. 5 is a top view of an example of a task executed by a robot of an embodiment of the present invention;

Fig. 6 is a schematic diagram of a path planning and solving process of an embodiment of the present invention;

Fig. 7 is a flow chart of updating pheromones in a road network of an embodiment of the present invention;

Fig. 8 is a result of path planning under a simple road network of an embodiment of the present invention;

Fig. 9 is a cloud map of a substation site of an embodiment of the present invention;

Fig. 10 is a schematic diagram of a path planning result under an actual road network of an embodiment of the present invention; and

Fig. 11 is an optimal solution changing curve under an actual road network of an embodiment of the present invention.

## DETAILED DESCRIPTION

In order to make the objectives, technical solutions and advantages of the present invention clearer, the present invention will be further described in detail below in combination with embodiments. It should be understood that the specific embodiments described herein are only used to explain the present invention, but not to limit the present invention.

Embodiment 1

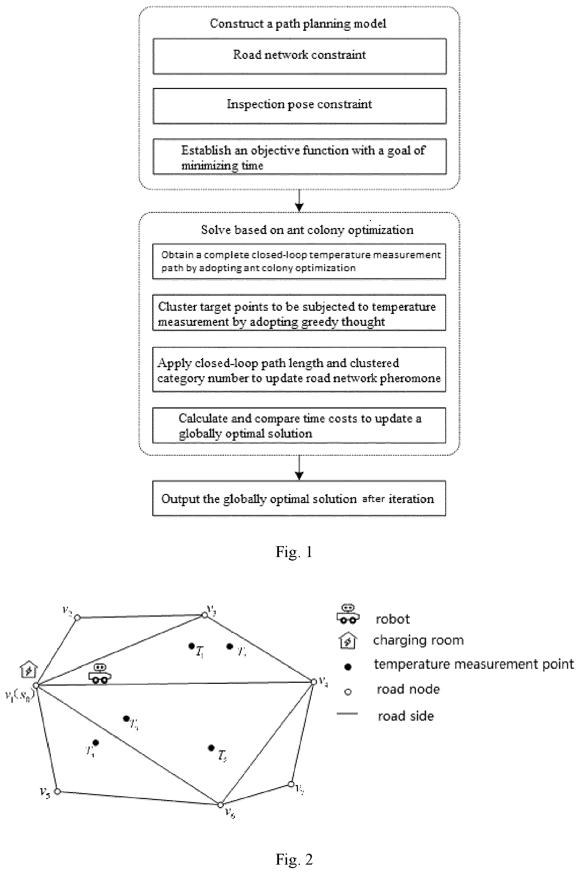

As shown in Fig. 1, a path planning method for a substation inspection robot includes the following steps:

1) A road network constraint model for robot movement is constructed according to a map; as shown in Fig. 2, an undirected graph $G(V, E)$ is used for representing the robot movement road network, wherein $V=[v_1,v_2,...v_n]$ is a road node set, $n$ is a number of road nodes, $E$ represents an undirected side set, $E(i,j)$ represents a side connected by $v_i$ and $v_j$, and a weight $W \in \mathrm{R}^{n \times n}$ represents a distance for the robot to pass through a corresponding side, for example, $w_{ij}$ represents a distance for the robot travelling from $v_i$ to $v_j$, and when $i \neq j$, $w_{ij}=w_{ij}$; and when $i=j$, $w_{ij}=w_{ij}=0$.

2) An inspection pose constraint model is constructed in consideration of actual constraints of the pose of a holder and a measured visual distance when the robot measures the temperature of a target in combination with temperature measurement points;

the temperature measurement points located near the road network are $T_i \in T$, $i$=1, 2,..., $N_T$, wherein $N_T$ represents the number of temperature measurement points. The position where the robot performs temperature measurement during $k$th stop is $s_k \in E(i,j)$, that is, it is at a certain point in the side $E(i,j)$, and a target set for completing temperature measurement during this stop is $T_s(s_k) \in T$, wherein $k$=1, 2,..., $K$, $K$ represents a total stop number, $K = N_T$ in general, and the neighborhood of all stop points needs to cover all temperature measurement point sets:

$$\bigcup_{k} T_\mathrm{s}\left(s_k\right) = T$$
;

and

a starting point of the inspection robot is usually a charging room position $s_0$, and an inspection path of the robot in the road network is $C = \left(v_1', v_2',...,v_{N'}'\right) \subseteq V$, wherein $v_1' = v_{N'}' = s_0$; and a side forming the above path is $E' = \left(v_i', v_{i+1}'\right) \subseteq E$, $i = 1,2,...,N'$-1, and the total path length is

$$l_C = \sum_{i=1}^{N'-1} w_{v_i', v_{i+1}'}$$
.

In a simple road network example, there are 8 road nodes and 15 road sides, and besides, 5 temperature measurement points are distributed near the road network. The height ranges from 7 m to 10 m through on-site survey, and the height position of the charging room is $v_1$. The specific parameters are shown in Table 1.

Table 1 Road Network Nodes and Temperature Measurement Points

| Road Network Nodes | Coordinate (m) | Temperature Measurement Points | Coordinate (m) |
|---|---|---|---|
| $v_1$ | (10, 40, 0) | $T_1$ | (32, 67, 7.5) |
| $v_2$ | (42, 84, 0) | $T_2$ | (94, 62, 8) |
| $v_3$ | (42, 11, 0) | $T_3$ | (45, 55, 8.5) |
| $v_4$ | (42, 40, 0) | $T_4$ | (125, 62, 9.5) |
| $v_5$ | (112, 82, 0) | $T_5$ | (128, 38, 10) |
| $v_6$ | (150, 52, 0) | | |
| $v_7$ | (84, 24, 0) | | |
| $v_8$ | (112, 11, 0) | | |

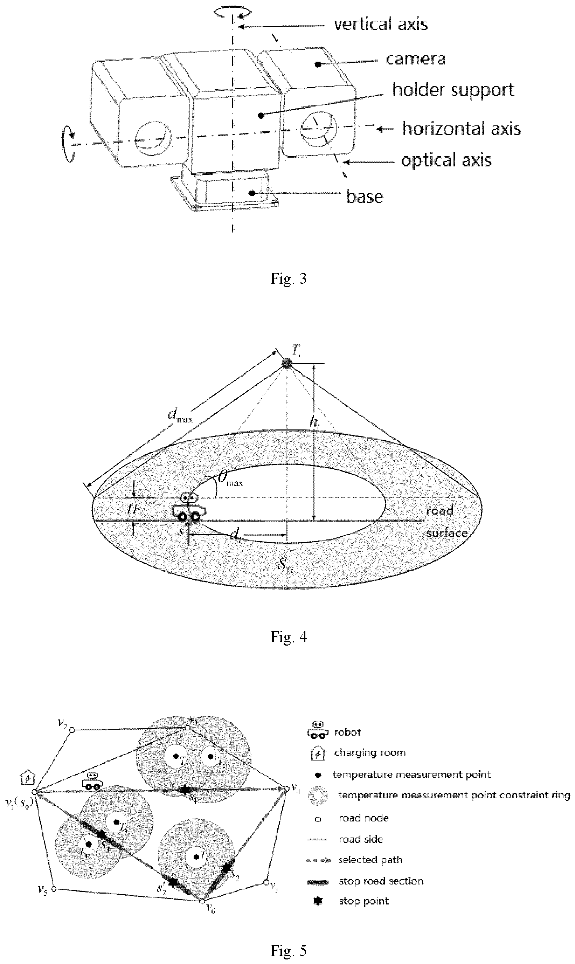

In the process that the robot measures the temperature of a target, the inspection pose constraints include a camera pitch angle measurement constraint and a maximum visual distance constraint. A holder for installation of a camera is as shown in Fig. 3, and can rotate around a horizontal axis and a vertical axis, wherein a range of rotation around the vertical axis is $(0, 2\pi)$, and a range of rotation around the horizontal axis is $(0, \theta_{max})$, wherein $\theta_{max}$ represents the maximum pitch angle of the camera constrained by the holder structure and shooting quality, $0 \le \theta_{max} \le \pi/2$. In practical application, temperature measurement points are located on an elevated line, so that only the influence of an upper limit $\theta_{max}$ of the pitch angle on the inspection task needs to be considered. As shown in Fig. 4, a temperature measurement point constraint ring $S_{Ti}$ is defined, which represents a set of positions that meet the pose constraint conditions when the robot measures $T_i$. A height of a temperature measurer from the ground is supposed to be $H$, the coordinate of the temperature measurement point $T_i$ is $(x_i, y_i, h_i)$, and $d_i$ is a horizontal distance between a robot stop point $s(x_s, y_s, 0)$ and the temperature measurement point $T_i$.

Therefore, the camera pitch angle and visual distance need to meet the following constraints respectively:

$$\arctan\left(\frac{h_i - H}{d_i}\right) \le \theta_{max}$$

$$\sqrt{d_i^2 + \left(h_i - H\right)^2} \le d_{max}$$

wherein $d_{max}$ represents a maximum visual distance of the camera when the measurement quality is met.

Due to

$$d_i = \sqrt{\left(x_s - x_i\right)^2 + \left(y_s - y_i\right)^2},$$

the constraint ring $S_{Ti}$ of the temperature measurement points is obtained:

$$S_{Ti} = \left\{ s(x_s, y_s, 0) \middle| \frac{h_i - H}{\tan\theta_{max}} \le \sqrt{\left(x_s - x_i\right)^2 + \left(y_s - y_i\right)^2} \le \sqrt{d_{max}^2 - \left(h_i - H\right)^2} \right\}$$

the temperature of the temperature measurement point $T_i$ can be effectively measured if and only if the robot is located in the region of the ring $S_{Ti}$.

3) Discretized path points are obtained by uniform interpolation on the path, it is assumed that the path discretization accuracy is $l_L$ (a distance between two adjacent discrete points), and a set of discrete points forming the path is $L$, a stop point $s_k$ of the robot in the discretized path is determined by an intersection of the temperature measurement point constraint ring $S_{Ti}$ and the discretized path $L$, i.e.

$$s_k \in \left( \bigcap_{T_i \in T_s(s_k)} S_{T_i} \right) \text{I} \ L, k = 1, 2, \ldots, K;$$

4) An inspection robot path planning model is constructed with a goal of minimizing time to complete inspection; the goal of the path planning is to obtain the robot inspection path $C$, each stop position $s_k$, and the temperature measurement point set $T_s(s_k)$ corresponding to each stop point, the inspection path length and stop point number are closely related to inspection time, and with a goal of completing the inspection task in the shortest total time, an objective function of the path planning is:

$$\min_{C, s_1, s_2, \ldots, s_K} f\left(G, T, s_0\right) = \lambda K + \frac{l_C}{v},$$

wherein $\lambda$ represents a constant of time consumed by the robot to perform temperature measurement during each stop, $\lambda K$ represents time required by performing $K$ stops for temperature measurement, $\frac{lC}{v}$ represents time required for continuous movement of the robot on a path, v is an average movement speed of the robot, and $l_C$ represents a total path length; based on the above analysis, an example of a task executed by the robot is as shown in Fig. 5. Firstly, the robot starts from the charging room $s_0$ and moves along a path indicated by an arrow, stops at $s_1$ to measure the temperatures of $T_1$ and $T_2$, stops at $s_2$ to measure the temperature of $T_5$, stops at $s_3$ to measure the temperatures of $T_3$ and $T_4$, and finally returns to the charging room.

In Fig. 5, an annular region is the constraint ring of each temperature measurement point. The path of the robot is partially covered by the intersection of temperature measurement rings, and is indicated by a thick solid line segment, which means that if the robot stops at any point on the road section, the corresponding target point can be measured. For example, when the robot stops at a road section at $s_1$, the temperatures of $T_1$ and $T_2$ can be measured. For the temperature measurement task of $T_5$, two separate road sections $s_2$ and $s_2'$ can be provided for selection.

5) The model is solved to output an inspection path and position of each stop point corresponding to a globally optimal solution, and a set of temperature measurement points corresponding to each stop point.

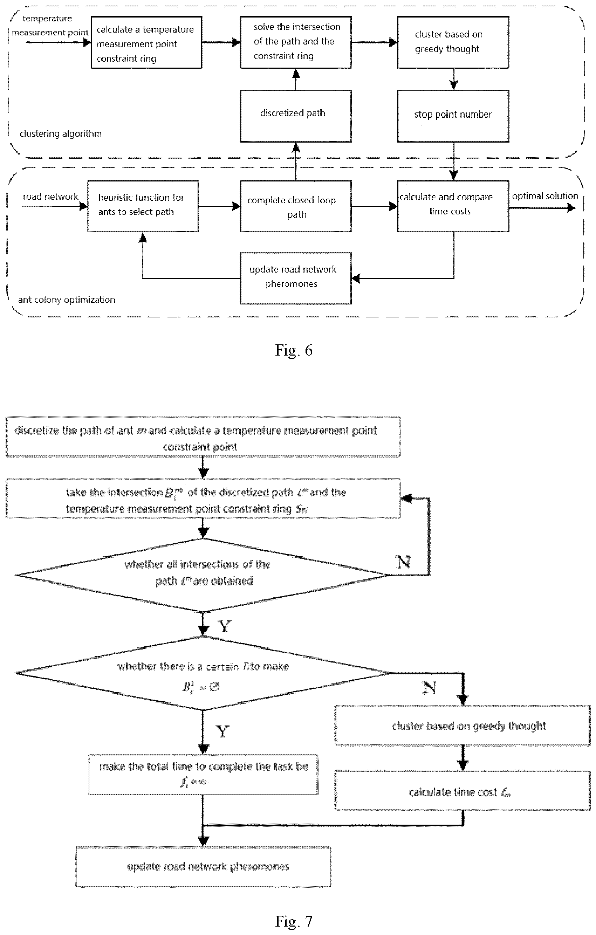

In the embodiment, a solution method based on ant colony optimization is adopted, and the process is as shown in Fig. 6, and the specific steps are as follows:

5.1) initializing relevant parameters: a number $M$ of ants, a pheromone importance factor $\alpha$, a heuristic function importance factor $\beta$, a pheromone volatilization degree $\rho$, a total pheromone release amount $Q$, a maximum iteration number $iter$ $max$, a height $H$ of a robot camera, a maximum upper limit $\theta_{max}$ of a camera pitch angle, the maximum camera visual distance $d_{max}$, a constant $\lambda$ of time consumed in the temperature measurement process of the robot, an average movement speed v of the robot, and a path discretization accuracy $l_L$, wherein the relevant parameters are as shown in Table 2:

Table 2 Ant Colony Optimization Parameters and Robot Parameters

| Ant Colony Optimization Parameters | $M$ | $\alpha$ | $\beta$ | $\rho$ | $Q$ | $iter\_max$ |
|---|---|---|---|---|---|---|
| | 10 | 0.6 | 0.2 | 0.3 | 0.2 | 80 |
| Robot Parameters | $d_{max}$(m) | $\theta_{max}$(rad) | $H$(m) | $l_L$ | $\lambda$(s) | $v$(m/s) |
| | 25 | p/3 | 0.5 | 0.5 | 15 | 1.5 |

wherein the maximum upper limit $\theta_{max}$ of the camera pitch angle is measured to be $\pi/3$, the maximum visual distance of the camera can be up to 50 m by changing a lens, and a best temperature measurement range is between 20 m and 30 m, so that $d_{max}$ is set to 25 m. $l_L$ is 0.5 m, which indicates that the path is composed of discrete points spaced from each other by 0.5 m.

5.2) constructing a solution space: at the initial moment, placing the ants in the charging room, and for the ants, sequentially skipping to a next node (not a repeated node) with a greatest random probability calculated according to a transition probability function until all the ants return to a starting point or there is no node to skip, and the transition probability function being shown as follows:

$$P_{ij}^m = \begin{cases} \dfrac{\left[\tau_{ij}\left(t\right)\right]^\alpha \left[\eta_{ij}\left(t\right)\right]^\beta}{\displaystyle\sum_{r \in allow_m} \left[\tau_{ir}\left(t\right)\right]^\alpha \left[\eta_{ir}\left(t\right)\right]^\beta}, r \in allow_m \\ 0, \qquad\qquad\qquad\qquad r \notin allow_m \end{cases}$$

wherein $\tau_{ij}(t)$ is the concentration of residual pheromones on a side $E(i, j)$ at a moment $t$, $n_{ij}(t)$ is a heuristic function and represents an expectation level of the ants from a node v; to a node $v_j$, which is inversely proportional to a distance between the nodes, and the heuristic function is as follows:

$$\eta_{ij}\left(t\right) = \frac{1}{w_{ij}}$$

$allow_m$ represents a set of nodes to be visited by an ant $m$, $\alpha$ is the pheromone importance factor, and $\beta$ is the heuristic function importance factor.

5.3) updating pheromones:

(1) marking a closed-loop path selected by the $m$th ant as $C^m$, calculating its length $l_C^m \left(m = 1, 2, \ldots, M\right)$, meanwhile, discretizing the $C^m$ to obtain a path point set $L^m$, so as to finally obtain the intersection of the $L^m$ and the constraint ring $S_{Ti}$ of the ith temperature measurement point, and marking the intersection as $B_i^m = S_{Ti} \cap L^m$;

(2) when $m=1$, judging whether there is a certain $T_i$ to make $B_i^1 = \varnothing$, $i = 1,2,\ldots, N_T$, if yes, indicating that the ant $m$ cannot complete all inspection tasks, so as to make the total time to complete the task be $f_1=\infty$; otherwise, clustering all the temperature measurement points on the path $C^m$ according to the constraints to obtain a total category number $K^1$, and substituting the total category number into the objective function to calculate inspection time cost $f_1$, sequentially calculating corresponding values $f_2$, $f_3$,..., $f_M$ when $m = 2,3,..., M$, and performing iteration according to the following formula:

$$\begin{cases} \tau_{ij}\left(t+1\right) = \left(1-\rho\right)\tau_{ij}\left(t\right) + \Delta\tau_{ij}\left(t\right) \\ \Delta\tau_{ij}\left(t\right) = \displaystyle\sum_{m=1}^M \Delta\tau_{ij}^m\left(t\right) \end{cases},$$

wherein $\rho \in (0,1)$ represents the pheromone volatilization degree, and $\Delta\tau_{ij}^m\left(t\right)$ represents the pheromone released by the ant $m$ on the side $E(i, j)$ and is as follows:

$$\Delta\tau_{ij}^m\left(t\right) = \begin{cases} \dfrac{Q}{f_m}, & \text{ant } m \text{ moving on } E(i, j) \\ 0, & \text{others} \end{cases},$$

wherein $Q$ is a constant, $f_m$ is the total time for the ant $m$ to complete the task, $\Delta\tau_{ij}(t)$ represents the sum of pheromones released by all ants in an ant colony on the side $E(i,j)$, and the updating flow of the pheromones in the road network is as shown in Fig. 7; and

5.4) judging whether the ant colony terminates iteration: calculating time consumed by all ants in current iteration to complete the inspection task, comparing the time with a globally optimal solution stored in previous iteration, and when there is a lower time cost, updating the globally optimal solution; then judging whether the iteration number reaches a maximum value, if not, returning to the step (2), and if yes, stopping calculation and reserving the globally optimal solution in the iteration process.

In the step 5.3) of the ant colony optimization, in order to obtain the stop solution of the robot for temperature measurement under different paths, the temperature measurement points need to be clustered. The category number obtained by clustering is the robot stop times. The temperature measurement points meeting the robot pose constraints are clustered into one category based on the greedy thought, and iteration is performed to obtain a clustering result.

The flow is as follows:

S1: Constructing an initial set $A=T$ of temperature measurement points to be clustered, and solving the intersection $B_i^m$ of the discretized path $L^m$ of the ant $m$ and the constraint ring $S_{Ti}$ of the ith temperature measurement point, wherein $i$=1, 2,..., $N_T$.

S2: Calculating a path point set $B_{i,j}^m = B_i^m \bigcap B_j^m$ , wherein $j>i$ and $T_j \in A$ , and the number $N_{i,j}^m = \left| B_{i,j}^m \right|$ of discrete points in the set $B_{i,j}^m$ represents the similarity between $T_i$ and $T_j$, and sorting all $N_{i,j}^m$ from large to small to obtain $N_{i,j_1}^m \geq N_{i,j_2}^m \geq ... \geq N_{i,j_Z}^m$ , wherein $Z = |A|$-1.

S3: If $N_{i,j_1}^m = 0$ , indicating that $T_i$ and other target points do not have a common feasible stop path point, then classifying $T_i$ into one category separately, i.e., $T_s^m(s_k) = \{T_i\}$ , and then skipping to S5 to calculate remaining stop points of the ant $m$, otherwise, performing S4;

S4: If $N_{i,j_1}^m > 0$ , the path point set being $B_{i,j_1}^m \neq \varnothing$ , defining the following feasible stop path set $D_{i,j_{r+1}}^m = D_{i,j_r}^m \bigcap B_{i,j_{r+1}}^m$ , wherein $D_{i,j_1}^m = B_{i,j_1}^m$ , and $r$=1, 2, ..., $Z$; the following is easily obtained:

$$r^* = \max r, \quad \text{s.t.} \quad D_{i,j_r}^m \neq \varnothing$$

thus obtaining a target set $T_s^m(s_k) = \{T_i, T_{j_1},..., T_{j_{r^*}}\}$ that can complete measurement of a stop point $s_k^m$ , wherein an expression of the corresponding stop point set is:

$$B_{T_s^m(s_k)}^m = \left( \coprod_{T_i \in T_s(s_k)} S_{T_i} \right) I \ L^m, k=1,2,...,K ,$$

and

the stop point $s_k^m$ is optionally selected from the stop point set $B_{T_s^m(s_k)}^m$ .

S5: Removing the target set $T_s^m(s_k)$ that can complete measurement from $A$, i.e., $A = A - T_s^m(s_k)$ , selecting a next temperature measurement point from $A$ and performing S2 until $A$ is an empty set, to obtain the stop point position $s_1^m, s_2^m, ... , s_K^m$ corresponding to the path of the ant $m$ and the corresponding temperature measurement point set $T_s^m(s_1), T_s^m(s_2), K , T_s^m(s_K)$ thereof.

S6: Adjusting the order of $s_k^m$ according to an order of the road nodes in the closed-loop path $C^m$ of the robot to obtain final $T_s^m(s_1)$, $T_s^m(s_2)$, K, $T_s^m(s_K)$ and $s_1^m, s_2^m, \ldots, s_K^m$ to avoid reciprocating movement of the robot in the path.

6) The globally optimal solution is output.

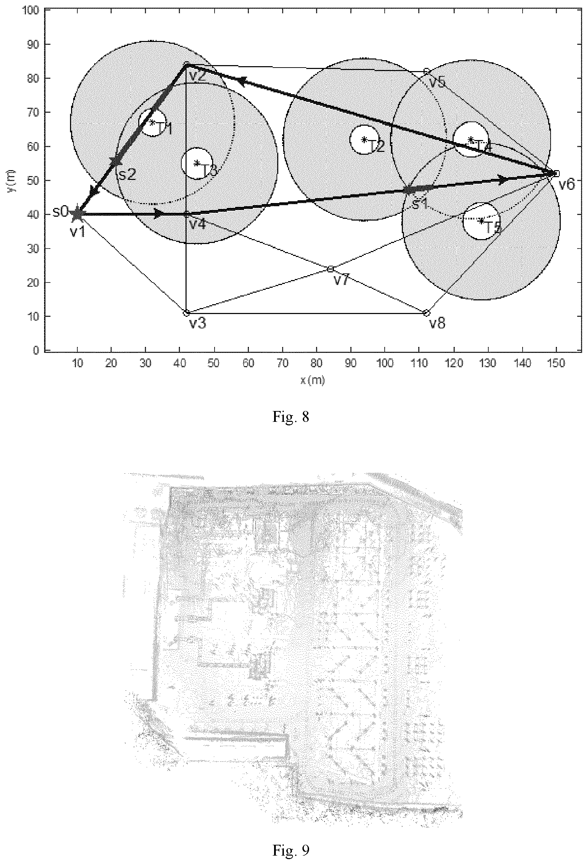

An simulation result of the simple road network example is as shown in Fig. 8, wherein $v_1$, $v_2$,..., $v_8$ represent road nodes, a five-pointed star represents a charging room position $s_0$, and asterisks represent the positions of temperature measurement points $T_1$, $T_2$,..., $T_5$, and the temperature measurement point constraint ring is a circle with the temperature measuring point as the center. A closed line segment in Fig. 8 is the final inspection path of the robot, including two times of stop, and the two times of stop are at $s_1$ and $s_2$. The thick solid line segment at $s_1$ indicates a road section for stop when the robot performs measurement on a target point set $\{T_2, T_4, T_5\}$. This road section is obtained by taking the intersection of the temperature measurement point constraint rings $S_{T2}$, $S_{T4}$, $S_{T5}$ and the discretized path. In the same way, a road section for stop at $s_2$ can be obtained, but due to the limitation of an inner ring of $S_{T1}$, the road section for stop is divided into two unconnected parts, which conforms to the actual situation that the robot cannot measure the temperature of $T_1$ in the inner ring of $S_{T1}$.

An optimal inspection path of the robot obtained by the method of the present invention is a path 1 in Table 3: $v_1$-$v_4$-$v_6$-$v_2$-$v_1$. In order to analyze the accuracy of the clustering method, three typical paths with different stop times are selected from an ant solution space, wherein a path 3 intersects with the temperature measurement point constraint rings to form 4 unconnected segments, and except for the first segment corresponding to $\{T_1, T_3\}$, the other three segments correspond to a temperature measurement point separately, indicating that the robot needs to stop on the path for 4 times to complete the task. A path 2 is analyzed in the similar way, the clustering result is consistent with the stop times in Table 3, indicating the accuracy of the clustering method. It can be seen from Fig. 8 that the robot inspection process is consistent with the clustering result shown in Table 4, indicating the feasibility of the solution method. It can be seen from comparison that the path 1 with the lowest time cost has the smallest stop number and the shortest path length compared to the other two paths.

Table 3 Comparison of Main Paths in Simple Road Network

| Serial No. | Closed-loop Path $C^m$ | Stop Times $K$ | Path Length $l_C$ | Time Cost $f$ |
|---|---|---|---|---|
| **Path 1** | V$_1$-V$_4$-V$_6$-V$_2$-V$_1$ | **2** | **307.71** | **235.14** |
| **Path 2** | V$_1$-V$_4$-V$_7$-V$_6$-V$_5$-V$_2$-V$_1$ | 3 | 321.45 | 259.33 |
| **Path 3** | V$_1$-V$_3$-V$_8$-V$_6$-V$_5$-V$_2$-V$_1$ | 4 | 341.94 | 287.96 |

Table 4 Clustering Result of Optimal Path 1 in Simple Road Network

| Stop Point | Coordinate (m) | Temperature Measurement Point Set $Ts(s_k)$ |
|---|---|---|
| $s_1$ | (106.98, 47.22 ,0) | T$_2$, T$_4$, T$_5$ |
| $s_2$ | (21.35, 55.61, 0) | T$_1$, T$_3$ |

Embodiment 2

In the embodiment, the process of path planning of the substation inspection robot is the same as that in Embodiment 1, except that the actual measurement data of the substation is used in this embodiment. The actual experimental data of the road network comes from the extraction of cloud map data from substation sites and field surveys. The top view effect of a point cloud map constructed by 16-line 3D laser radar is as shown in Fig. 9. The map clearly shows the map size, the position of the substation equipment and other information, irregular dotted lines around are substation walls, discrete points in the walls are wire support poles, the coordinates and dimensions of corresponding entities are obtained by a Rviz visualization platform under ROS, and correction is performed in combination with the field survey with a laser range finder.

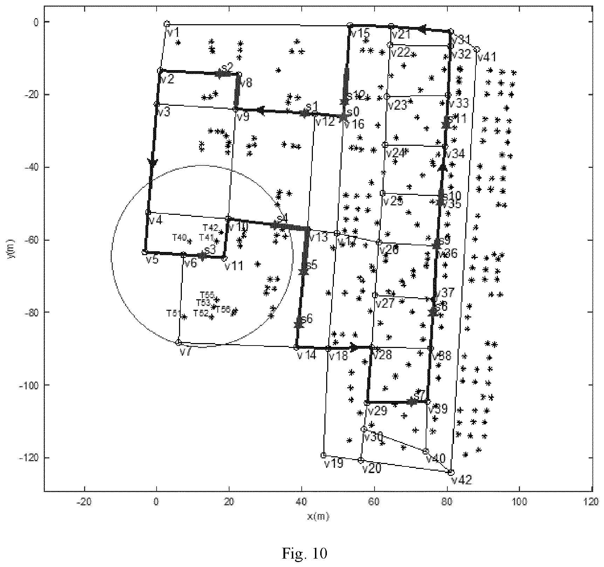

Since the temperature measurement points are usually in clustered distribution according to electric poles, in this simulation, the positions of the electric poles are used instead of the positions of the temperature measurement points. The substation has a range of 100×120 m, including 270 temperature measurement points. The road network established according to the experimental data consists of 42 nodes and 63 sides, as shown in Fig. 10. Due to the increase in the temperature measurement points, the discretization accuracy of the road network is set to be 0.1 and the number of ants is increased to 500 to avoid no solution. The relevant parameters of the ant colony optimization are as shown in Table 2. The optimal inspection path of the robot in the actual substation road network is as shown in the closed line segment in Fig. 10, wherein the meanings of the symbols are the same as those in Fig. 8, and the charging room is located at a node $v_{16}$.

A circle with $s_3$ as the center in Fig. 10 is the maximum visual range of the temperature measurement camera when the robot stops at $s_3$, and the radius of the circle is the maximum visual distance $d_{max}$ of the camera, asterisks indicate the positions of target points $T_1$, $T_2$,..., $T_{270}$, Due to the large number of temperature measurement points, except for the temperature measurement point set $Ts(s_3)$, the numbers of other temperature measurement points and the corresponding temperature measurement point constraint rings are not marked. The simulation result shows that the optimal inspection path of the robot starts from the charging room $v_{16}$ and returns to the charging room after completing all the inspection tasks. The robot needs to stop for 12 times in total, and the stop points are $s_1$, $s_2$,..., $s_{12}$, as shown in six-pointed stars in Fig. 10.

The method of the present invention is adopted to obtain the ant solution space that meets the constraint conditions, and the time cost is calculated according to the formula of the objective function, wherein three paths with the lowest time cost are as shown in Table 5. It can be seen from Table 5 that the time cost of a path 1 is the lowest, which is the optimal path C*, the stop times and path length of a path 2 are both greater than those of C*, and the length of a path 3 is smaller than that of C*, but the stop times is greater than that of C*. Therefore, the optimal path C* represents an inspection solution with the best overall performance. Table 6 shows the clustering result of the temperature measurement points of the optimal path C*, and the robot needs to stop on this path for 12 times to complete the temperature measurement of 270 target points. In addition, the temperature measurement point set $T_s(s_3)$ are all located in the circle with $s_3$ as the center in Fig. 10, and the clustering result is consistent with the fact that the robot measures the temperature of $T_s(s_3)$ at $s_3$.

Table 5 Comparison of Main Paths in Actual Road Network

| Serial No. | Closed-loop Path $C^m$ | Stop Times $K$ | Path Lengt $h\,l_C$ | Time Cost $f$ |
|---|---|---|---|---|
| **Path 1** | 16-12-9-8-2-3-4-5-6-11-10-13-14-18-28-29-39-38-37-36-35-34-33-32-31-21-15-16 | **12** | 405.99 | **450.66** |
| **Path 2** | 16-12-9-8-2-3-4-5-6-11-10-13-17-18-19-20-42-41-31-21-15-16 | 13 | 449.04 | 494.36 |
| **Path 3** | 16-12-9-8-2-3-4-5-6-11-10-13-17-26-27-28-29-39-38-37-36-35-34-33-32-31-21-15-16 | 14 | **401.64** | 477.76 |

Table 6 clustering result of optimal path **C***

| Stop Point | Coordinate | Temperature Measurement Point Number And Temperature Measurement Point Set $T_s(S_k)$ |
|---|---|---|
| $s_1$ | (40.72, -25.07, 0) | 21 |
| $s_2$ | (17.30, -14.28, 0) | 15 |
| $s_3$ | (12.58, -64.56, 0) | 8 ($T_{40}$, $T_{41}$, $T_{42}$, $T_{51}$, $T_{52}$, $T_{53}$, $T_{55}$, $T_{56}$) |
| $s_4$ | (32.57, -55.92, 0) | 10 |
| $s_5$ | (40.50, -68.88, 0) | 20 |
| $s_6$ | (39.16, -83.42, 0) | 17 |
| $s_7$ | (70.30, -104.53, 0) | 28 |
| $s_8$ | (76.25, -80.15, 0) | 27 |
| $s_9$ | (77.25, -61.83, 0) | 36 |
| $s_{10}$ | (78.16, -49.65, 0) | 35 |
| $s_{11}$ | (79.80, -28.46, 0) | 36 |
| $s_{12}$ | (51.79, -22.02, 0) | 17 |
|  | Total | 270 |

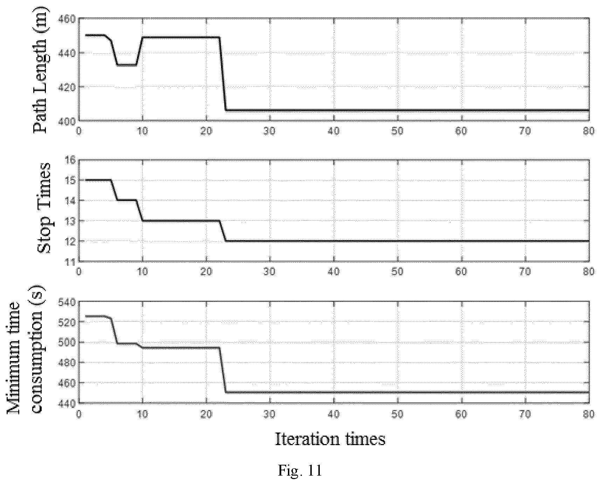

Fig. 11 shows the changing curves of the minimum time consumption of all ants in the iteration process based on the ant colony optimization, and the corresponding stop times and path length.

The minimum time consumption curve is obtained by weighting the curve of the stop times and the path length curve according to the objective function. At the beginning of the iteration, the pheromone has a small impact on the ant colony, the ants find their way according to the heuristic function, and the minimum time cost curve does not change significantly. After 7 times of iterations, as the pheromone increases, the ants gradually tend to find a path with lower time cost, and the iteration curve shows a downward trend. After 23 times of iterations, the curve of the minimum stop times basically no longer changes, indicating that the time consumed for completing the inspection task may reach an optimal value.

It should be understood that those of ordinary skill in the art can make improvements or alternations based on the above description, and all these improvements and alternations should fall within the protection scope of the appended claims of the present invention.

**Claims**

1.   A path planning method for a substation inspection robot, **characterized by** comprising the following steps:

   1) constructing a road network constraint model according to a map for robot movement;
   2) constructing a temperature measurement point inspection pose constraint model in consideration of actual constraints of the pose of a holder for installation of a camera and a measured visual distance of the camera when the robot measures the temperature of a target in combination with temperature measurement points;
   3) determining a robot stop point set according to the robot movement road network and the temperature measurement point inspection pose constraint model;
   4) constructing an inspection robot path planning model with a goal of minimizing time to complete inspection,

$$\min_{C,s_1,s_2,\ldots,s_K} f\left(G,T,s_0\right)=\lambda K+\frac{l_C}{v}$$

   and specifically,      ,

   wherein $\lambda$ represents a constant of time consumed by the robot to perform temperature measurement

   during each stop, $\lambda K$ represents time required by performing $K$ stops for temperature measurement, $\frac{l_C}{v}$ represents time required for continuous movement of the robot on a path, v is an average movement speed of the robot, and $l_C$ represents a total path length;
   G represents a robot movement road network, $T$ represents a set of all temperature measurement points, $s_0$ represents a position of a charging room, $C$ represents an inspection path of the robot in the road network,

$s_k$ represents a position where the robot performs temperature measurement during $k$th stop, $k = 1,2,..., K$; and

5) solving the inspection robot path planning model to output an inspection path and position of each stop point corresponding to a globally optimal solution, and a set of temperature measurement points corresponding to each stop point, wherein the inspection robot path planning model is used as a path planning solution for the substation inspection robot to perform temperature measurement tasks.

2. The path planning method for the substation inspection robot according to claim 1, **characterized in that** the step 1) of constructing the road network constraint model for robot movement according to the map is specifically as follows: an undirected graph $G$ ($V, E$) is used for representing the robot movement road network, wherein $V = [v_1, v_2,...v_n]$ is a road node set, $n$ is a number of road nodes, $E$ represents an undirected side set, $E(i,j)$ represents a side connected by $v_i$ and $v_j$, and a weight $W \in R^{n \times n}$ represents a distance for the robot to pass through a corresponding side.

3. The path planning method for the substation inspection robot according to claim 1, **characterized in that** the step 2) of constructing the inspection pose constraint model is specifically as follows:

In the process that the robot measures the temperature of the target, inspection pose constraints comprise a camera pitch angle measurement constraint and a maximum visual distance constraint; $\theta_{max}$ represents a maximum pitch angle of a camera constrained by a holder structure and shooting quality, and $d_{max}$ represents a maximum visual distance of the camera when a measurement quality is met,

$$\arctan(\frac{h_i - H}{d_i}) \leq \theta_{max} \; ;$$

$$\sqrt{d_i^2 + (h_i - H)^2} \leq d_{max} \; ;$$

$$d_i = \sqrt{(x_s - x_i)^2 + (y_s - y_i)^2} \; ;$$

wherein $H$ is a height of a temperature measurer from the ground, the coordinate of a temperature measurement point $T_i$ is ($x_i, y_i, h_i$), and $d_i$ is a horizontal distance between a robot stop point $s(x_s, y_s, 0)$ and the temperature measurement point $T_i$;
a temperature measurement point constraint ring $S_{Ti}$ is calculated, the temperature measurement point constraint ring $S_{Ti}$ represents a position set meeting inspection pose constraint conditions when the robot measures $T_i$;

$$S_{Ti} = \left\{ s(x_s, y_s, 0) \left| \frac{h_i - H}{\tan\theta_{max}} \leq \sqrt{(x_s - x_i)^2 + (y_s - y_i)^2} \leq \sqrt{d_{max}^2 - (h_i - H)^2} \right. \right\} \; ;$$

and
when the robot is located in the region of the ring $S_{Ti}$, the robot effectively measures the temperature of the temperature measurement point $T_i$.

4. The path planning method for the substation inspection robot according to claim 3, **characterized in that** the step 3) of determining the robot stop point set is specifically as follows:
obtaining discretized path points by uniform interpolation on the path in the road network; assuming that a path discretization accuracy is $l_L$, and a set of discrete points forming the path is $L$, and determining a stop point $s_k$ of the robot in the discretized path by an intersection of the temperature measurement point constraint ring $S_{Ti}$ and the discretized path $L$, i.e.

$$s_k \in \left( \underset{T_i \in T_s(s_k)}{I} S_{T_i} \right) I \ L, k = 1, 2, \ldots, K$$

.

**5.** The path planning method for the substation inspection robot according to claim 1, **characterized in that** the step 5) of solving the model is specifically as follows:

obtaining a closed-loop path that can complete the temperature measurement task by adopting ant colony optimization, then discretizing the closed-loop path, clustering the temperature measurement points by using greedy thought, applying a clustering result and a length of the closed-loop path to update road network pheromones, and meanwhile, comparing time costs in an objective function of the path planning model to update the globally optimal solution.

**6.** The path planning method for the substation inspection robot according to claim 5, **characterized in that** the step 5) of obtaining the closed-loop path that can complete the temperature measurement task by adopting the ant colony optimization is specifically as follows:

5.1) initializing relevant parameters: a number $M$ of ants, a pheromone importance factor $\alpha$, a heuristic function importance factor $\beta$, a pheromone volatilization degree $\rho$, a total pheromone release amount $Q$, a maximum iteration number *iter max,* a height $H$ of a robot camera, a maximum upper limit $\theta_{max}$ of a camera pitch angle, a maximum camera visual distance $d_{max}$, a constant $\lambda$ of time consumed in a temperature measurement process of the robot, an average movement speed v of the robot, and a path discretization accuracy $l_L$;

5.2) constructing a solution space: at the initial moment, placing the ants in the charging room, and for the ants, sequentially skipping to a next node (not a repeated node) with a greatest random probability calculated according to a transition probability function until all the ants return to a starting point or there is no node to skip, and the transition probability function being shown as follows:

$$P_{ij}^m = \begin{cases} \dfrac{\left[ \tau_{ij}(t) \right]^\alpha \left[ \eta_{ij}(t) \right]^\beta}{\sum\limits_{r \in allow_m} \left[ \tau_{ir}(t) \right]^\alpha \left[ \eta_{ir}(t) \right]^\beta}, & r \in allow_m \\ 0, & r \notin allow_m \end{cases}$$

wherein $\tau_{ij}(t)$ is the concentration of residual pheromones on a side $E(i, j)$ at a moment $t$, $\eta_{ij}(t)$ is a heuristic function and represents an expectation level of the ants from a node $v_i$ to a node $v_j$, which is inversely proportional to a distance between the nodes, and the heuristic function is as follows:

$$\eta_{ij}(t) = \frac{1}{w_{ij}},$$

$allow_m$ represents a set of nodes to be visited by an ant $m$, $\alpha$ is the pheromone importance factor, and $\beta$ is the heuristic function importance factor.

5.3) updating pheromones:

5.3.1) marking a closed-loop path selected by the mth ant as $C^m$, calculating its length $l_C^m (m = 1, 2, \ldots, M)$, meanwhile, discretizing the $C^m$ to obtain a path point set $L^m$, so as to finally obtain the intersection of the $L^m$ and the constraint ring $S_{Ti}$ of the ith temperature measurement point, and marking the intersection as $B_i^m = S_{Ti} \cap L^m$;

5.3.2) when $m = 1$, judging whether there is a certain $T_i$ to make $B_i^1 = \varnothing$, $i = 1, 2, \ldots, N_T$, if yes, indicating that the ant $m$ cannot complete all inspection tasks, so as to make the total time to complete the task be $f_1$ = ∞; otherwise, clustering all the temperature measurement points on the path $C^m$ according to the constraints to obtain a total category number $K^1$, and substituting the total category number into the objective function to calculate inspection time cost $f_1$, sequentially calculating corresponding values $f_2$, $f_3$,..., $f_M$ when $m$ = 2, 3,..., $M$ , and performing iteration according to the following formula:

$$\begin{cases} \tau_{ij}\left(t+1\right) = \left(1-\rho\right)\tau_{ij}\left(t\right) + \Delta\tau_{ij}\left(t\right) \\ \Delta\tau_{ij}\left(t\right) = \sum_{m=1}^{M} \Delta\tau_{ij}^{m}\left(t\right) \end{cases},$$

wherein $\rho \in (0,1)$ represents the pheromone volatilization degree, and $\Delta\tau_{ij}^{m}\left(t\right)$ represents the pheromone released by the ant $m$ on the side $E(i, j)$ and is as follows:

$$\Delta\tau_{ij}^{m}\left(t\right) = \begin{cases} \dfrac{Q}{f_m}, & \text{ant } m \text{ moving on } E(i, j) \\ 0, & \text{others} \end{cases},$$

wherein $Q$ is a constant, $f_m$ is the total time for the ant $m$ to complete the task, and $\Delta\tau_{ij}(t)$ represents the sum of pheromones released by all ants in an ant colony on the side $E(i, j)$; and

5.4) judging whether the ant colony terminates iteration: calculating time consumed by all ants in current iteration to complete the inspection task, comparing the time with a globally optimal solution stored in previous iteration, and when there is a lower time cost, updating the globally optimal solution; then judging whether the iteration number reaches a maximum value, if not, returning to the step 5.2), and if yes, stopping calculation and reserving the globally optimal solution in the iteration process.

**7.** The path planning method for the substation inspection robot according to claim 6, **characterized in that** the step 5.3.2) of clustering all the temperature measurement points on the path $C^m$ according to the constraints comprises clustering the temperature measurement points meeting the inspection pose constraints into one category based on the greedy thought, and performing iteration to obtain a clustering result, the category number obtained by clustering being the robot stop times, specifically as follows:

S 1: constructing an initial set $A=T$ of temperature measurement points to be clustered, and solving the intersection $B_i^m$ of the discretized path $L^m$ of the ant $m$ and the constraint ring $S_{Ti}$ of the $i$th temperature measurement point, wherein $i$=1, 2,..., $N_T$;

S2: calculating a path point set $B_{i,j}^m = B_i^m \cap B_j^m$ , wherein $j>i$ and $T_j \in A$, and the number $N_{i,j}^m = \left| B_{i,j}^m \right|$ of discrete points in the set $B_{i,j}^m$ represents the similarity between $T_i$ and $T_j$ and sorting all $N_{i,j}^m$ from large to small to obtain $N_{i,j_1}^m \geq N_{i,j_2}^m \geq ... \geq N_{i,j_Z}^m$ , wherein $Z = |A| - 1$ ;

S3: if $N_{i,j_1}^m = 0$ , indicating that $T_i$ and other target points do not have a common feasible stop path point, then classifying $T_i$ into one category separately, i.e., $T_s^m(s_k) = \{T_i\}$ , and then skipping to S5 to calculate remaining stop points of the ant $m$, otherwise, performing S4;

S4: if $N_{i,j_1}^m > 0$ , the path point set being $B_{i,j_1}^m \neq \varnothing$ , defining the following feasible stop path set $D_{i,j_{r+1}}^m = D_{i,j_r}^m \cap B_{i,j_{r+1}}^m$ , wherein $D_{i,j_1}^m = B_{i,j_1}^m$ , and $r$=1, 2,..., $Z$;

calculating the following constraint formula to determine $r*$

$$r* = \max r, \quad \text{s.t.} \ D_{i,j_r}^m \neq \varnothing$$

thus obtaining a target set $T_s^m(s_k) = \{T_i, T_{j_1}, ..., T_{j_{r*}}\}$ that can complete measurement of a stop point $s_k^m$, wherein an expression of the corresponding stop point set is:

$$B_{T_s^m(s_k)}^m = \left( \bigcup_{T_i \in T_s(s_k)} S_{T_i} \right) I \ L^m, k = 1, 2, ..., K,$$

and

the stop point $s_k^m$ is optionally selected from the stop point set $B_{T_s^m(s_k)}^m$;

S5: removing the target set $T_s^m(s_k)$ that can complete measurement from $A$, i.e., $A = A - T_s^m(s_k)$, selecting a next temperature measurement point from $A$ and performing S2 until $A$ is an empty set, to obtain a stop point position $s_1^m, s_2^m, ..., s_K^m$ corresponding to the path of the ant $m$ and the corresponding temperature measurement point set $T_s^m(s_1), T_s^m(s_2), K, T_s^m(s_K)$ thereof; and

S6: adjusting the order of $s_k^m$ according to an order of the road nodes in the closed-loop path $C^m$ of the robot to obtain final $T_s^m(s_1), T_s^m(s_2), K, T_s^m(s_K)$ and $s_1^m, s_2^m, ..., s_K^m$ to avoid reciprocating movement of the robot in the path.

**Patentansprüche**

1. Pfadplanungsverfahren für einen Roboter zur Inspektion eines Umspannwerks, **dadurch gekennzeichnet, dass** es folgende Schritte umfasst:

   1) Erstellen, abhängig von einer Karte für Roboterbewegung, eines Straßennetz-Einschränkungsmodells;
   2) Erstellen, unter Berücksichtigung tatsächlicher Einschränkungen für eine Pose eines Halters zum Installieren einer Kamera und eine gemessene Sichtweite der Kamera bei einer Messung einer Temperatur eines Ziels durch einen Roboter, eines Einschränkungsmodells für Inspektionsposen an Temperaturmesspunkten in Kombination mit Temperaturmesspunkten,
   3) Bestimmen, abhängig von einem Straßennetz für Roboterbewegung und dem Einschränkungsmodell für Inspektionsposen an Temperaturmesspunkten, einer Menge von Haltepunkten des Roboters;
   4) Erstellen eines Pfadplanungsmodells für den Roboter zur Inspektion, mit dem die Zeit bis zum Abschluss der Inspektion minimiert wird, und insbesondere, $\min_{C, s_1, s_2, ..., s_K} f(G, T, s_0) = \lambda K + \dfrac{l_C}{v}$,

   wobei $\lambda$ für eine Konstante einer Zeit steht, die der Roboter zur Durchführung einer Temperaturmessung bei jedem Stopp verbraucht, wobei $\lambda K$ für eine Zeit steht, die zum Durchführen von $K$ Stopps für die Temperaturmessung erforderlich ist, wobei $\dfrac{l_C}{v}$ für eine Zeit steht, die für eine kontinuierliche Bewegung des Roboters auf einem Pfad erforderlich ist, wobei $v$ eine durchschnittliche Bewegungsgeschwindigkeit des Roboters ist, und $l_C$ für eine gesamte Pfadlänge steht;
   wobei $G$ für ein Straßennetz für Roboterbewegung steht, wobei $T$ für eine Menge aller Temperaturmesspunkte steht, wobei $s_0$ für eine Position eines Laderaums steht, wobei $C$ für einen Inspektionspfad des Roboters im Straßennetz steht, wobei $s_k$ für eine Position steht, an der der Roboter während des k-ten Stopps eine Temperaturmessung durchführt, mit $k = 1, 2, ..., K$; und

5) Lösen des Pfadplanungsmodells für den Roboter zur Inspektion, um einen Inspektionspfad und eine Position jedes Haltepunkts, die einer global optimalen Lösung entsprechen, und eine Menge Temperaturmesspunkten, die einzelnen Haltepunkten entsprechen, auszugeben, wobei das Pfadplanungsmodell für den Roboter zur Inspektion als eine Pfadplanungslösung für den Roboter zur Inspektion eines Umspannwerks verwendet wird, um Temperaturmessaufgaben durchzuführen.

2. Pfadplanungsverfahren für einen Roboter zur Inspektion eines Umspannwerks nach Anspruch 1, **dadurch gekennzeichnet, dass** der Schritt 1) des Erstellens, abhängig von einer Karte für Roboterbewegung, eines Straßennetz-Einschränkungsmodells insbesondere wie folgt ist:
Verwenden eines ungerichteten Graphs $G(V, E)$ zum Darstellen des Straßennetzes für Roboterbewegung, wobei $V=[v_1, v_2, ... v_n]$ eine Menge von Straßenknoten ist, wobei $n$ eine Anzahl von Straßenknoten ist, wobei $E$ für eine Menge von ungerichteten Kanten steht, wobei $E(i,j)$ für eine Kante seht, die $v_i$ und $v_j$ verbindet, und wobei ein Gewicht $W \in \mathbb{R}^{n \times n}$ für einen Abstand steht, den der Roboter beim Passieren der entsprechenden Kante zurücklegt.

3. Pfadplanungsverfahren für einen Roboter zur Inspektion eines Umspannwerks nach Anspruch 1, **dadurch gekennzeichnet, dass** der Schritt 2) des Erstellens eines Einschränkungsmodells für Inspektionsposen insbesondere wie folgt ist:

in einem Prozess, in dem der Roboter die Temperatur des Ziels misst, umfassen Inspektionsposen-Einschränkungen eine Einschränkung für die Messung eines Neigungswinkels einer Kamera und eine Einschränkung der maximalen Sichtweite,
wobei $\theta_{max}$ für einen maximalen Neigungswinkel einer Kamera steht, der durch eine Halterstruktur und eine Aufnahmequalität eingeschränkt ist, wobei $d_{max}$ für eine maximale Sichtweite der Kamera bei einer Erfüllung einer Messqualität steht,

$$\arctan\left(\frac{h_i - H}{d_i}\right) \le \theta_{max} \quad ;$$

$$\sqrt{d_i^2 + \left(h_i - H\right)^2} \le d_{max} \quad ;$$

$$d_i = \sqrt{\left(x_s - x_i\right)^2 + \left(y_s - y_i\right)^2} \quad ;$$

wobei $H$ eine Höhe eines Temperaturmessers vom Boden ist, wobei die Koordinate eines Temperaturmesspunkts $T_i$ durch $(x_i, y_i, h_i)$ dargestellt ist, und wobei $d_i$ ein horizontaler Abstand zwischen einem Haltepunkt des Roboters $s(x_s, y_s, 0)$ und dem Temperaturmesspunkt $T_i$ ist;
wobei ein Temperaturmesspunkt-Einschränkungsring $S_{Ti}$ berechnet wird, wobei der Temperaturmesspunkt-Einschränkungsring $S_{Ti}$ für eine Menge von Positionen steht, die bei einer Messung von $T_i$ durch den Roboter Inspektionsposen-Einschränkungsbedingungen erfüllen;

$$S_{Ti} = \left\{ s\left(x_s, y_s, 0\right) \,\middle|\, \frac{h_i - H}{\tan\theta_{max}} \le \sqrt{\left(x_s - x_i\right)^2 + \left(y_s - y_i\right)^2} \le \sqrt{d_{max}^2 - \left(h_i - H\right)^2} \right\} \quad ;$$

und
wobei, wenn der sich der Roboter im Bereich des Rings $S_{Ti}$ befindet, der Roboter die Temperatur des Temperaturmesspunkts $T_i$ effektiv misst.

4. Pfadplanungsverfahren für einen Roboter zur Inspektion eines Umspannwerks nach Anspruch 3, **dadurch gekennzeichnet, dass** der Schritt 3) des Bestimmens einer Menge von Haltepunkten des Roboters insbesondere wie folgt ist:
Erhalten von diskretisierten Pfadpunkten durch eine gleichmäßige Interpolation auf dem Pfad im Straßennetz, wobei unter der Annahme, dass eine Genauigkeit der Pfaddiskretisierung $l_L$ ist und eine Menge diskreter Punkte, die den Pfad bilden, $L$ ist, und dass ein Haltepunkt $s_k$ des Roboters in dem diskretisierten Pfad durch eine Schnittmenge des Temperaturmesspunkt-Einschränkungsrings $S_{Ti}$ und des diskretisierten Pfads $L$ bestimmt wird, folgende Formel vorliegt:

$$s_k \in \left( \coprod_{T_i \in T_s(s_k)} S_{T_i} \right) I \ L, k = 1, 2, \ldots, K$$

.

5. Pfadplanungsverfahren für einen Roboter zur Inspektion eines Umspannwerks nach Anspruch 1, **dadurch gekennzeichnet, dass** der Schritt 5) des Lösens des Modells insbesondere wie folgt ist:
Erhalten eines Pfades mit geschlossener Schleife, der die Temperaturmessaufgabe durch die Anwendung einer Ameisenkolonie-Optimierung vervollständigen kann, anschließendes Diskretisieren des Pfades mit geschlossener Schleife, Clustern der Temperaturmesspunkte unter Verwendung eines gierigen Gedankens, Anwenden eines Clustering-Ergebnisses und einer Länge des Pfades mit geschlossener Schleife, um Straßennetz-Pheromone zu aktualisieren, und gleichzeitiges Vergleichen von Zeitaufwand in einer Zielfunktion des Pfadplanungsmodells, um die global optimale Lösung zu aktualisieren.

6. Pfadplanungsverfahren für einen Roboter zur Inspektion eines Umspannwerks nach Anspruch 5, **dadurch gekennzeichnet, dass** der Schritt 5) des Erhaltens eines Pfades mit geschlossener Schleife, der die Temperaturmessaufgabe durch die Anwendung einer Ameisenkolonie-Optimierung vervollständigen kann, insbesondere wie folgt ist:

5.1) Initialisierung relevanter Parameter: eine Anzahl $M$ von Ameisen, ein Pheromon-Wichtigkeitsfaktor $\alpha$, ein Wichtigkeitsfaktor heuristischer Funktion $\beta$, ein Pheromon-Verflüchtigungsgrad $\rho$, eine Gesamtmenge von freigesetzten Pheromonen $Q$, eine maximale Iterationszahl *iter max,* eine Höhe $H$ einer Kamera eines Roboters, eine maximale Obergrenze $\theta_{max}$ eines Neigungswinkels der Kamera, eine maximale Sichtweite der Kamera $d_{max}$, eine Konstante $\lambda$ einer Zeit, die in einem Temperaturmessprozess des Roboters verbraucht ist, eine durchschnittliche Bewegungsgeschwindigkeit $v$ des Roboters und eine Genauigkeit der Pfaddiskretisierung $l_L$;
5.2) Erstellen eines Lösungsraumes: Platzieren der Ameisen im Laderaum zum Anfangszeitpunkt, wobei die Ameisen nacheinander zu einem nächsten Knoten (nicht zu einem wiederholten Knoten) mit einer größten Zufallswahrscheinlichkeit, die gemäß einer Übergangswahrscheinlichkeits-Funktion berechnet wird, springen, bis alle Ameisen zu einem Ausgangspunkt zurückkehren oder es keinen Knoten zum Springen gibt, wobei die Übergangswahrscheinlichkeits-Funktion wie folgt dargestellt ist:

$$P_{ij}^m = \begin{cases} \dfrac{\left[ \tau_{ij}(t) \right]^\alpha \left[ \eta_{ij}(t) \right]^\beta}{\sum\limits_{r \in allow_m} \left[ \tau_{ir}(t) \right]^\alpha \left[ \eta_{ir}(t) \right]^\beta}, & r \in allow_m \\ 0, & r \notin allow_m \end{cases},$$

wobei $\tau_{ij}(t)$ eine Konzentration von Restpheromonen auf einer Kante $E(i, j)$ zu einem Zeitpunkt $t$ ist, wobei $n_{ij}(t)$ eine heuristische Funktion ist und ein Erwartungsniveau der Ameisen von einem Knoten $v_i$ zu einem Knoten $v_j$ darstellt, das umgekehrt proportional zu einem Abstand zwischen den Knoten ist, wobei die heuristische Funktion wie folgt ist:

$$\eta_{ij}(t) = \frac{1}{w_{ij}},$$

wobei $allow_m$ für eine Menge von Knoten steht, die von einer Ameise $m$ zu besuchen sind, wobei $\alpha$ der Pheromon-Wichtigkeitsfaktor ist, und wobei $\beta$ die Wichtigkeitsfaktor heuristischer Funktion ist;
5.3) Aktualisieren von Pheromonen:

5.3.1) Markieren eines von der $m$-ten Ameise gewählten Pfades mit geschlossener Schleife als $C^m$, Berechnen seiner Länge $l_C^m \left( m = 1, 2, \ldots, M \right)$, und gleichzeitiges Diskretisieren von $C^m$ zum Erhalten einer Menge von Pfadpunkten $L^m$, um schließlich eine Schnittmenge von $L^m$ und dem Einschränkungsring $S_{Ti}$ des i-ten Temperaturmesspunktes zu erhalten, und Markieren der Schnittmenge als $B_i^m = S_{Ti} \bigcap L^m$;

5.3.2) Beurteilen bei $m=1$, ob es einen bestimmten $T_i$ gibt, bei dem

$$B_i^1 = \varnothing, i = 1, 2, \ldots, N_T$$

gilt; falls ja, wird es angezeigt, dass die Ameise $m$ nicht alle Inspektionsaufgaben erledigen kann, so dass die Gesamtzeit für die Erledigung der Aufgabe $f_1=\infty$ ist; andernfalls erfolgt ein Clustern aller Temperaturmesspunkte auf dem Pfad $C^m$ abhängig von den Einschränkungen, um eine Gesamtanzahl von Kategorien $K^1$ zu erhalten, wobei die Gesamtanzahl von Kategorien in die Zielfunktion eingesetzt wird, um eine Inspektions-Zeitaufwand $f_1$ zu berechnen, wobei bei $m = 2,3,\ldots,M$ entsprechende Werte $f_2, f_3, \ldots, f_M$ nacheinander berechnet werden, und wobei eine Iteration gemäß der folgenden Formel durchgeführt wird:

$$\begin{cases} \tau_{ij} \left( t + 1 \right) = \left( 1 - \rho \right) \tau_{ij} \left( t \right) + \Delta \tau_{ij} \left( t \right) \\ \Delta \tau_{ij} \left( t \right) = \sum_{m=1}^{M} \Delta \tau_{ij}^m \left( t \right) \end{cases},$$

wobei $\rho \in (0,1)$ für den Pheromon-Verflüchtigungsgrad steht und $\Delta\tau_{ij}^m \left( t \right)$ für das von der Ameise $m$ auf der Kante $E(i, j)$ freigesetzte Pheromon steht und wie folgt ist:

$$\Delta \tau_{ij}^m \left( t \right) = \begin{cases} \dfrac{Q}{f_m}, & \text{Ameise } m \text{ bewegt sich auf } E(i, j) \\ 0, & \text{Sonstiges} \end{cases},$$

wobei $Q$ eine Konstante ist, $f_m$ die Gesamtzeit ist, die für die Ameise $m$ zur Erledigung der Aufgabe benötigt ist, und wobei $\Delta\tau_{ij} \left( t \right)$ für die Summe von Pheromonen steht, die von allen Ameisen in einer Ameisenkolonie auf der Kante $E(i, j)$ freigesetzt werden; und

5.4) Beurteilen, ob die Ameisenkolonie die Iteration beendet: Berechnen einer Zeit, die alle Ameisen in einer aktuellen Iteration zur Erledigung der Inspektionsaufgabe verbrauchen, Vergleichen der Zeit mit einer global optimalen Lösung, die in einer vorherigen Iteration gespeichert wurde, und Aktualisieren, wenn der Zeitaufwand geringer ist, der global optimalen Lösung; anschließendes Beurteilen, ob die Iterationszahl einen Maximalwert erreicht, wobei, falls nicht, ein Zurückkehren zu Schritt 5.2) erfolgt, und wobei, falls ja, das Berechnen gestoppt wird und die global optimale Lösung im Iterationsprozess reserviert wird.

7. Pfadplanungsverfahren für einen Roboter zur Inspektion eines Umspannwerks nach Anspruch 6, **dadurch gekennzeichnet, dass** der Schritt 5.3.2) des Clusterns aller Temperaturmesspunkte auf dem Pfad $C^m$ abhängig von den Einschränkungen ein Clustern der Temperaturmesspunkte, die die Inspektionsposen-Einschränkungen erfüllen, in eine Kategorie basierend auf dem gierigen Gedanken und ein Durchführen von Iterationen zum Erhalten eines Clustering-Ergebnisses umfasst, wobei die durch das Clustern erhalten Anzahl der Kategorien die Anzahl der Stopps der Roboters ist, insbesondere wie folgt:

S1: Erstellen einer anfänglichen Menge $A=T$ von zu clusternden Temperaturmesspunkten, und Lösen der Schnittmenge $B_i^m$ des diskretisierten Pfades $L^m$ der Ameise $m$ und des Einschränkungsringes $S_{Ti}$ des i-ten Temperaturmesspunktes, wobei $i=1, 2,..., N_T$;

S2: Berechnen einer Menge von Pfadpunkten $B_{i,j}^m = B_i^m \cap B_j^m$, wobei $j>i$ und $T_j \in A$, und wobei die Anzahl $N_{i,j}^m = \left| B_{i,j}^m \right|$ der diskreten Punkte in der Menge $B_{i,j}^m$ die Ähnlichkeit zwischen $T_i$ und $T_j$ darstellt; und Sortieren aller von $T_j$ von groß nach klein, um $N_{i,j_1}^m \geq N_{i,j_2}^m \geq ... \geq N_{i,j_Z}^m$ zu erhalten, wobei $Z = |A| - 1$ gilt;

S3: bei $N_{i,j_1}^m = 0$ wird es anzeigt, dass $T_i$ und andere Zielpunkte keinen gemeinsamen machbaren Haltepunkt am Pfad haben, wonach ein separates Klassifizieren von $T_i$ in eine Kategorie erfolgt, d.h., $T_s^m(s_k) = \{T_i\}$, wonach ein Springen zu S5 erfolgt, um verbleibende Haltepunkte der Ameise $m$ zu berechnen, wobei andernfalls der Schritt S4 durchgeführt wird;

S4: bei $N_{i,j_1}^m > 0$ ist die Menge von Pfadpunkten $B_{i,j_1}^m \neq \varnothing$, wobei die folgende machbare Stopppfadmenge als $D_{i,j_{r+1}}^m = D_{i,j_r}^m \cap B_{i,j_{r+1}}^m$ definiert ist, wobei $D_{i,j_1}^m = B_{i,j_1}^m$ und $r=1, 2,..., Z$;
Berechnung der folgenden Einschränkungsformel zur Bestimmung von $r*$:

$$r* = \max r, \quad \text{s.t. } D_{i,j_r}^m \neq \varnothing$$

wodurch eine Zielmenge $T_s^m(s_k) = \{T_i, T_{j_1},..., T_{j_{r*}}\}$ erhalten wird, die die Messung eines Haltepunkts $s_k^m$ vervollständigen kann, wobei ein Ausdruck der entsprechenden Menge von Haltepunkten lautet:

$$B_{T_s^m(s_k)}^m = \left( \prod_{T_i \in T_s(s_k)} S_{T_i} \right) \text{I } L^m, k = 1, 2,..., K,$$

und

wobei der Haltepunkt $s_k^m$ optional aus der Menge von Haltepunkten $B_{T_s^m(s_k)}^m$ ausgewählt ist;

S5: Entfernen der Zielmenge $T_s^m(s_k)$, die die Messung vervollständigen kann, aus $A$, d.h. $A = A - T_s^m(s_k)$, Auswählen eines nächsten Temperaturmesspunkts aus $A$ und Durchführen von S2, bis $A$ eine leere Menge wird, um eine Haltepunktposition $s_1^m, s_2^m, ..., s_K^m$ zu erhalten, die dem Pfad der Ameise $m$ und der entsprechenden Menge von Temperaturmesspunkten $T_s^m(s_1), T_s^m(s_2), \text{K}, T_s^m(s_K)$ davon entspricht; und

S6: Anpassen der Reihenfolge von $s_k^m$ abhängig von einer Reihenfolge der Straßenknoten in dem Pfad mit geschlossener Schleife $C^m$ des Roboters, um die endgültigen Werte $T_s^m(s_1), T_s^m(s_2), \text{K}, T_s^m(s_K)$ und $s_1^m, s_2^m, ..., s_K^m$ zu erhalten, so dass eine Hin- und Herbewegung des Roboters auf dem Pfad vermieden wird.

**Revendications**

1. Procédé de planification de trajectoire pour un robot d'inspection de sous-station, **caractérisé en ce qu'**il comprend les étapes suivantes :

   1) construire un modèle de contraintes de réseau routier en fonction d'une carte de mouvement du robot ;
   2) construire un modèle de contraintes de pose d'inspection à point de mesure de la température en tenant compte de contraintes réelles de la pose d'un support d'installation d'une caméra et d'une distance visuelle mesurée de la caméra lorsque le robot mesure la température d'une cible en combinaison avec des points de mesure de la température ;

3) déterminer un ensemble de points d'arrêt du robot en fonction du réseau routier du mouvement du robot et du modèle de contraintes de pose d'inspection à point de mesure de la température ;

4) construire un modèle de planification de trajectoire du robot d'inspection dans le but de minimiser un temps nécessaire à l'inspection, et en particulier, $\min\limits_{C,s_1,s_2,\ldots,s_K} f\left(G,T,s_0\right)=\lambda K+\dfrac{l_C}{v}$ ,

où $\lambda$ représente une constante du temps consommé par le robot pour effectuer une mesure de la température lors de chaque arrêt, $\lambda K$ représente le temps nécessaire à $K$ arrêts pour mesurer la température, $\dfrac{l_C}{v}$ représente le temps nécessaire à un mouvement continu du robot sur une trajectoire, v est une vitesse moyenne du mouvement du robot et $l_C$ représente une longueur totale de la trajectoire ;

$G$ représente un réseau routier du mouvement du robot, $T$ représente un ensemble de tous les points de mesure de la température, $s_0$ représente une position d'une salle de charge, $C$ représente une trajectoire d'inspection du robot dans le réseau routier, $s_k$ représente une position à laquelle le robot effectue la mesure de la température lors du kème arrêt, $k$ = 1, 2,..., $K$; et

5) résoudre le modèle de planification de trajectoire du robot d'inspection pour générer une trajectoire d'inspection et une position de chaque point d'arrêt correspondant à une solution globalement optimale, et un ensemble de points de mesure de la température correspondant à chaque point d'arrêt, dans lequel le modèle de planification de trajectoire du robot d'inspection est utilisé comme solution de planification de trajectoire pour le robot d'inspection de sous-station afin d'effectuer des tâches de mesure de la température,

2. Procédé de planification de trajectoire pour le robot d'inspection de sous-station selon la revendication 1, **caractérisé en ce que** l'étape 1) de construire un modèle de contraintes de réseau routier en fonction d'une carte de mouvement du robot est en particulier la suivante :
un graphe non dirigé $G$ ($V$, $E$) est utilisé pour représenter le réseau routier du mouvement du robot, où $V=[v_1,v_2,\ldots v_n]$ est un ensemble de noeuds de route, $n$ est un nombre de noeuds de route, $E$ représente un ensemble de côtés non dirigés, $E(i,j)$ représente un côté relié par $v_i$ et $v_j$, et un poids $W \in \mathrm{R}^{n\times n}$ représente une distance par laquelle passe le robot depuis un côté correspondant.

3. Procédé de planification de trajectoire pour le robot d'inspection de sous-station selon la revendication 1, **caractérisé en ce que** l'étape 2) de construire un modèle de contraintes de pose d'inspection est en particulier la suivante :

dans le processus où le robot mesure la température de la cible, les contraintes de pose d'inspection comprennent une contrainte de mesure de l'angle de tangage d'une caméra et une contrainte de la distance visuelle maximale ; $\theta_{\max}$ représente un angle de tangage maximal d'une caméra sous des contraintes d'une structure de support et d'une qualité de prise de vue, et $d_{\max}$ représente une distance visuelle maximale de la caméra lorsqu'une qualité de mesure est atteinte,

$$\arctan\left(\frac{h_i-H}{d_i}\right)\leq\theta_{\max}\quad;$$

$$\sqrt{d_i^2+\left(h_i-H\right)^2}\leq d_{\max}\quad;$$

$$d_i=\sqrt{\left(x_s-x_i\right)^2+\left(y_s-y_i\right)^2}\quad;$$

où $H$ est une hauteur d'un thermomètre par rapport au sol, une coordonnée d'un point de mesure de la tempé-

rature $T_i$ est $(x_i, y_i, h_i)$, et $d_i$ est une distance horizontale entre un point d'arrêt du robot $s(x_s, y_s, 0)$ et le point de mesure de la température $T_i$ ;

un anneau de contrainte de point de mesure de la température $S_{Ti}$ est calculé, l'anneau de contrainte de point de mesure de la température $S_{Ti}$ représentant un ensemble de positions répondant aux conditions de contraintes de pose d'inspection lorsque le robot mesure $T_i$ ;

$$S_{Ti} = \left\{ s\left(x_s, y_s, 0\right) \middle| \frac{h_i - H}{\tan\theta_{max}} \leq \sqrt{\left(x_s - x_i\right)^2 + \left(y_s - y_i\right)^2} \leq \sqrt{d_{max}^2 - \left(h_i - H\right)^2} \right\} ;$$

et

lorsque le robot est situé dans la région de l'anneau $S_{Ti}$, le robot mesure efficacement la température du point de mesure de la température $T_i$.

4. Procédé de planification de trajectoire pour le robot d'inspection de sous-station selon la revendication 3, **caractérisé en ce que** l'étape 3) de déterminer un ensemble de points d'arrêt du robot est en particulier la suivante :
obtenir des points de trajectoire discrétisée par interpolation uniforme dans la trajectoire dans le réseau routier ;
supposer qu'une précision de discrétisation de trajectoire soit $l_L$, et un ensemble de points discrets formant la trajectoire soit $L$, et déterminer un point d'arrêt $s_k$ du robot dans la trajectoire discrétisée par une intersection entre l'anneau de contrainte de point de mesure de la température $S_{Ti}$ et la trajectoire discrétisée $L$, soit :

$$s_k \in \left( \coprod_{T_i \in T_s(s_k)} S_{T_i} \right) I \; L, k = 1, 2, \ldots, K .$$

5. Procédé de planification de trajectoire pour le robot d'inspection de sous-station selon la revendication 1, **caractérisé en ce que** l'étape 5) de résoudre le modèle est en particulier la suivante :
obtenir une trajectoire en boucle fermée qui peut accomplir la tâche de mesure de la température en adoptant une optimisation des colonies de fourmis, puis discrétiser la trajectoire en boucle fermée, regrouper les points de mesure de la température en utilisant une pensée gourmande, appliquer un résultat de regroupement et une longueur de la trajectoire en boucle fermée pour mettre à jour des phéromones du réseau routier, et parallèlement, comparer les coûts temporels dans une fonction objectif du modèle de planification de trajectoire pour mettre à jour la solution globalement optimale.

6. Procédé de planification de trajectoire pour le robot d'inspection de sous-station selon la revendication 5, **caractérisé en ce que** l'étape 5) d'obtenir une trajectoire en boucle fermée qui peut accomplir la tâche de mesure de la température en adoptant une optimisation des colonies de fourmis est en particulier la suivante :

5.1) initialiser des paramètres pertinents : un nombre $M$ de fourmis, un facteur d'importance des phéromones $\alpha$, un facteur d'importance de fonction heuristique $\beta$, un degré de volatilisation de phéromones $\rho$, une quantité totale de libération des phéromones $Q$, un nombre maximal d'itérations $iter\_max$, une hauteur $H$ d'une caméra robot, une limite supérieure maximale $\theta_{max}$ d'un angle de tangage de la caméra, une distance visuelle maximale de la caméra $d_{max}$, une constante $\lambda$ du temps consommé par le robot dans un processus de mesure de la température, une vitesse moyenne du mouvement v du robot, et une précision de discrétisation de la trajectoire $l_L$ ;

5.2) construire un espace de solution : au moment initial, placer les fourmis dans la salle de charge, et pour les fourmis, sauter séquentiellement à un noeud suivant (pas un noeud répété) avec une probabilité aléatoire la plus grande calculée par une fonction de probabilité de transition jusqu'à ce que toutes les fourmis reviennent à un point de départ ou qu'il n'y ait pas de noeud à sauter, et la fonction de probabilité de transition est la suivante :

$$P_{ij}^m = \begin{cases} \dfrac{\left[\tau_{ij}(t)\right]^\alpha \left[\eta_{ij}(t)\right]^\beta}{\sum\limits_{r\in allow_m}\left[\tau_{ir}(t)\right]^\alpha \left[\eta_{ir}(t)\right]^\beta}, & r \in allow_m \\[6mm] 0, & r \notin allow_m \end{cases},$$

où $\tau_{ij}(t)$ est la concentration de phéromones résiduelles sur un côté $E(i, j)$ à un moment $t$, $\eta_{ij}(t)$ est une fonction heuristique et représente un niveau d'espérance des fourmis d'un noeud $v_i$ à un noeud $v_j$, qui est inversement proportionnel à une distance entre les noeuds, et la fonction heuristique est la suivante :

$$\eta_{ij}(t) = \frac{1}{w_{ij}},$$

$allow_m$ représente un ensemble de noeuds à visiter par une fourmi $m$, $\alpha$ est le facteur d'importance de phéromone, et $\beta$ est le facteur d'importance de la fonction heuristique ;

5.3) mettre à jour les phéromones :

5.3.1) marquer une trajectoire en boucle fermée choisie par la $m$éme fourmi comme $C^m$, calculer sa longueur $l_C^m\left(m = 1, 2, \ldots, M\right)$, et parallèlement, discrétiser la $C^m$ pour obtenir un ensemble de points $L^m$ de la trajectoire, de manière à obtenir finalement l'intersection entre $L^m$ et l'anneau de contrainte $S_{Ti}$ du $i$ème point de mesure de la température, et marquer l'intersection comme $B_i^m = S_{Ti} \cap L^m$ ;

5.3.2) lorsque $m$=1, juger s'il y a un certain $T_i$ à faire $B_i^1 = \varnothing, i = 1, 2, \ldots, N_T$, si oui, indiquer que la fourmi $m$ ne peut pas accomplir toutes les tâches d'inspection, de manière à faire que le temps total pour accomplir la tâche soit $f_1 = \infty$ ; sinon, regrouper tous les points de mesure de la température dans la trajectoire $C^m$ en fonction des contraintes pour obtenir un nombre de catégorie total $K^1$, et substituer le nombre de catégorie total dans la fonction objectif pour calculer le coût temporel d'inspection $f_1$, calculer séquentiellement des valeurs correspondantes $f_2$, $f_3$, ...,$f_M$ lorsque $m = 2,3,\ldots ,M$, et effectuer une itération selon la formule suivante :

$$\begin{cases} \tau_{ij}(t+1) = (1-\rho)\tau_{ij}(t) + \Delta\tau_{ij}(t) \\ \Delta\tau_{ij}(t) = \sum\limits_{m=1}^{M} \Delta\tau_{ij}^m(t) \end{cases},$$

où $\rho \in (0,1)$ représente un degré de volatilisation de phéromones, et $\Delta\tau_{ij}^m(t)$ représente la phéromone libérée par la fourmi $m$ du côté $E(i,j)$ et est la suivante :

$$\Delta\tau_{ij}^m(t) = \begin{cases} \dfrac{Q}{f_m}, & \text{fourmi } m \text{ déplaçant sur } E(i,j) \\[4mm] 0, & \text{autres} \end{cases},$$

où $Q$ est une constante, $f_m$ est le temps total nécessaire à accomplir la tâche par la fourmi $m$, et $\Delta\tau_{ij}(t)$ représente une somme des phéromones libérées par toutes les fourmis dans une colonie de fourmis du côté $E(i,j)$ ; et

5.4) juger si la colonie de fourmis termine l'itération : calculer le temps consommé par toutes les fourmis dans l'itération actuelle pour accomplir la tâche d'inspection, comparer le temps avec une solution globalement optimale stockée dans l'itération précédente, et lorsqu'il existe un coût de temps inférieur, mettre à jour la solution globalement optimale ; puis juger si le nombre d'itérations atteint une valeur maximale, sinon, revenir à l'étape 5.2), et si oui, arrêter le calcul et réserver la solution globalement optimale dans le processus d'itération.

**7.** Procédé de planification de trajectoire pour le robot d'inspection de sous-station selon la revendication 6, **caractérisé en ce que** l'étape 5.3.2) de regrouper tous les points de mesure de la température dans la trajectoire $C^m$ en fonction des contraintes comprend : regrouper des points de mesure de la température répondant aux contraintes de pose d'inspection dans une catégorie basée sur la pensée gourmande, et effectuer une itération pour obtenir un résultat de regroupement, le nombre de catégorie obtenu par regroupement étant le nombre de fois d'arrêt du robot, et est en particulier la suivante :

S1 : construire un ensemble initial $A=T$ de points de mesure de la température à regrouper, et résoudre l'intersection $B_i^m$ entre la trajectoire discrétisée $L^m$ de la fourmi $m$ et l'anneau de contrainte $S_{Ti}$ du $i$ème point de mesure de la température, où $i=1, 2,..., N_T$ ;

S2 : calculer un ensemble de points de trajectoire $B_{i,j}^m = B_i^m \bigcap B_j^m$, où $j>i$ et $T_j \in A$, et le nombre $N_{i,j}^m = \left| B_{i,j}^m \right|$ de points discrets dans l'ensemble $B_{i,j}^m$ représente la similitude entre $T_i$ et $T_j$, et sélectionner tout $N_{i,j}^m$ dans un ordre de grand à petit pour obtenir $N_{i,j_1}^m \geq N_{i,j_2}^m \geq ... \geq N_{i,j_Z}^m$, où $Z = |A|-1$ ;

S3 : si $N_{i,j_1}^m = 0$, indiquer que $T_i$ et d'autres points cibles n'ont pas de point d'arrêt possible commun, puis classer $T_i$ dans une catégorie séparément, soit $T_s^m(s_k) = \left\{ T_i \right\}$, et puis passer à S5 pour calculer les points d'arrêt restants de la fourmi $m$, sinon, effectuer S4 ;

S4 : si $N_{i,j_1}^m > 0$, l'ensemble de points de trajectoire étant $B_{i,j_1}^m \neq \varnothing$, définir l'ensemble de trajectoires d'arrêt possible suivant $D_{i,j_{r+1}}^m = D_{i,j_r}^m \bigcap B_{i,j_{r+1}}^m$, où $D_{i,j_1}^m = B_{i,j_1}^m$, $r=1, 2,..., Z$ ;

calculer la formule de contrainte suivante pour déterminer $r^*$

$$r^* = \max r, \quad \text{s.t.} \ D_{i,j_r}^m \neq \varnothing$$

obtenir ainsi un ensemble cible $T_s^m(s_k) = \left\{ T_i, T_{j_1}, ..., T_{j_{r^*}} \right\}$ qui peut accomplir la mesure d'un point d'arrêt $s_k^m$, dans lequel l'ensemble de points d'arrêt correspondant est exprimé comme :

$$B_{T_s^m(s_k)}^m = \left( \mathop{\text{I}}_{T_i \in T_s(s_k)} S_{T_i} \right) \text{I} \ L^m, k = 1, 2, ..., K$$,

et

le point d'arrêt $s_k^m$ est éventuellement choisi dans l'ensemble de points d'arrêt $B_{T_s^m(s_k)}^m$ ;

S5 : enlever l'ensemble cible $T_s^m(s_k)$ qui peut accomplir la mesure de $A$, soit, $A = A - T_s^m(s_k)$ sélectionner un point suivant de mesure de la température de $A$ et effectuer S2 jusqu'à ce que $A$ soit un ensemble vide, obtenant ainsi une position de point d'arrêt $s_1^m, s_2^m, ..., s_K^m$ correspondant à la trajectoire de la fourmi $m$ et à l'ensemble de points de mesure de la température $T_s^m(s_1), T_s^m(s_2), \text{K}, T_s^m(s_K)$ correspondant de celui-ci ; et

S6 : ajuster l'ordre de $s_k^m$ en fonction d'un ordre des noeuds de route dans la trajectoire en boucle fermée $C^m$

du robot pour obtenir $T_s^m(s_1),\ T_s^m(s_2)$, K, $T_s^m(s_K)$ et $s_1^m,\ s_2^m,\ \ldots,\ s_K^m$ finaux pour éviter tout mouvement alternatif du robot dans la trajectoire.

Fig. 1

Fig. 2

Fig. 3

Fig. 4

Fig. 5

Fig. 6

Fig. 7

Fig. 8

Fig. 9

Fig. 10

Fig. 11